# EUROPÄISCHE PATENTSCHRIFT

(11) **EP 1 033 070 B1**
(45) Veröffentlichungstag und Bekanntmachung des Hinweises auf die Patenterteilung: **12.11.2003**
(21) Anmeldenummer: 99104130.2
(22) Anmeldetag: 02.03.1999
(51) Int. Cl.: A01B 15/14

(54) **Anbaupflug mit Einstellzentrum**
Hitched plough with adjustable centre
Charrue attelée à centre ajustable

(43) Veröffentlichungstag der Anmeldung: 06.09.2000
(73) Patentinhaber: Lemken GmbH & Co. KG, 46519 Alpen (DE)
(72) Erfinder: Terboven, Johannes Dipl. Ing., 46519 Alpen (DE)
(74) Vertreter: Schulte, Jörg, Dipl.-Ing.

(56) Entgegenhaltungen:
- EP-A- 0 045 030
- DE-B- 1 242 929
- DE-C- 3 136 539
- FR-A- 1 397 999
- GB-A- 2 135 562

## Beschreibung

Anbaupflug mit einem mindestens zwei Pflugkörper aufweisenden Pflugrahmen und mit einem zwischen Pflugkoppel bzw. einem Pflugturm und Pflugrahmen angeordneten Einstellzentrum mit Stelleinrichtung für die Einstellung der Breite der Vorderfurche und des Zugpunktes, wobei die Pflugkoppel Anschlagpunkte für ein Dreipunktgestänge bzw. die Unterlenker eines Zugfahlzeuges, die über Anschläge seitlich gesperrt sind, aufweist, wobei der Zugpunkt relativ zum Pflugrahmen und zur Pflugkoppel bzw. zum Pflugturm seitlich verschiebbar ausgebildet ist, wobei Pflugkoppel/Pflugturm und Pflugrahmen mittelbar oder unmittelbar ein unbeabsichtigtes seitliches Verschieben zueinander verhindernd miteinander verbunden sind und wobei das Einstellzentrum eine Stelleinrichtung für den Zugpunkt und eine Pflugrahmen und Pflugkoppel/Pflugturm fixierende Fixiereinrichtung aufweist, die eine beschränkte Verschwenkung zwischen Pflugrahmen und Pflugkoppel/Pflugturm um den Zugpunkt zulassend ausgebildet ist.

Ein Anbaupflug mit einem Einstellzentrum für die Einstellung der Breite der Vorderfurche und des Zugpunktes ist dem deutschen Patent DE-PS 28 45 111 zu entnehmen. Der Gegenstand des DE-PS 28 45 111 weist ein Einstellzentrum auf, über das die Vorderfurchenbreite und unabhängig dayon der Zugpunkt bzw. die Schlepper-/Pflugzuglinie eingestellt werden kann. Diese Einstellvorrichtung hat aber den Nachteil, dass sowohl für die Einstellung der Breite der Vorderfurche als auch für die Verstellung der Schlepper-/Pflugzuglinie bzw. des Zugpunktes das Dreipunktgestänge bzw. die Pflugkoppel bzw. der Pflugturm seitlich verschwenkt werden muss. Insbesondere bei Anbaupflügen in Verbindung mit einem Dreipunktgestänge der Kategorie 3 und breiten Schlepperreifen verbleibt nur wenig Raum zwischen den Traktorhinterrädern. Dadurch kann das Dreipunktgestänge bzw. der Pflugturm nicht immer ausreichend seitlich verschwenkt werden, um eine ausreichende Zugpunkteinstellung zu erreichen. Aus dem Prospekt VDV 5' - 10.91 der Firma Krone ist ein Anbaupflug bekannt, bei dem die Breite der Vorderfurche in Form einer Parallelverschiebung erreicht wird, wobei das Traktordreipunktgestänge seitlich gesperrt ist und der Zugpunkt durch ein vertikales Gelenk im Bereich des Pflugturmes gebildet wird. Dieser Anbaupflug kann zwar hinsichtlich der Vorderfurchenbreite ausreichend gut eingestellt werden, eine Zugpunkteinstellung, insbesondere eine Zugpunkteinstellung unabhängig von der Vorderfurchenbreite, ist aber bei diesem System nicht möglich, zumindest nicht mit seitlich gesperrtem Dreipunktgestänge. Auch die DE 12 42 929 B zeigt einen Drehpflug mit einer Einstellvorrichtung, die bei Betätigung zu einer seitlichen Verlagerung oder zu einem Verschwenken des Pflugrahmens zum Pflugturm führt, wozu aber der notwendige Raum bei breiten Schlepperreifen nicht vorhanden ist.

Der Erfindung liegt daher die Aufgabe zugrunde, einen Anbaupflug mit einfachem und funktionssicherem Einstellzentrum für Zugpunkt und Vorderfurche zu schaffen, das eine ausreichende Zugpunktanpassung auch bei geringem Abstand zwischen den Zugfahrzeughinterreifen ermöglicht.

Die Aufgabe wird gemäß der Erfindung durch die Merkmale des Anspruches 1 gelöst.

Durch diese Ausbildungsform ist sichergestellt, dass bei seitlich gesperrtem Traktordreipunktgestänge eine Zugpunktkorrektur vorgenommen werden kann, die eine seitliche Verlagerung des Pflugturmes bzw. des Dreipunktgestänges nicht erfordert. Dadurch ist es möglich, auch bei extrem engen Schlepperspurbreiten bzw. einem engen Radabstand sowohl mit kleinen als auch mit großen Pflügen praktisch seitenzugfrei zu pflügen, wobei die Fixiereinrichtung eine beschränkte Verschwenkung zwischen Pflugrahmen und Pflugkoppel/Pflugturm zulassend ausgebildet ist, wodurch sich der Pflug während der Arbeit frei um den Zugpunkt bewegen kann. Während des Drehvorganges wird gleichzeitig sichergestellt, dass der Pflugrahmen nicht frei nach unten durchschwenken kann.

Besonders zweckmäßig wird eine Rahmeneinschwenkung, wenn die Fixiereinrichtung den Pflugrahmen über einen Hydraulikzylinder um den Zugpunkt bzw. einen Drehpunkt oder Bolzen verschwenkend ausgebildet ist. Dieser Hydraulikzylinder weist einen nur in Arbeitsstellung wirksamen Freilauf auf. Dadurch ist gewährleistet, dass unter Beibehaltung aller zuvor beschriebenen Vorteile der Pflugrahmen während des Drehvorganges eingeschwenkt wird, sodass dadurch ein ausreichender Freiraum zwischen Pflugrahmen und Boden sichergestellt ist. Während der Pflugarbeit kann der Pflug dem Schlepper, durch den Zugpunkt gerührt, individuell folgen. Die Stelleinrichtung zur Einstellung der Breite der Vorderfurche als auch die Stelleinrichtung für den Zugpunkt sind über Spindeln verstellbar ausgebildet.

Eine seitliche Fixierung des Pflugrahmens in Relation zum Pflugturm bzw. zur Pflugkoppel ist dadurch möglich, dass das Einstellzentrum mit Stelleinrichtung dem Pflugrahmen zugeordnete Rahmenplatten mit Langlöchern aufweisen und zusätzlich ein bogenförmiges Langloch, das zusammen mit einem dem Einstellzentrum zugeordneten Bolzen als Fixiereinrichtung wirkend ausgeführt ist. Die Rahmenplatten stehen seitlich vom Pflugrahmen ab bzw. sind mit diesem seitlich verbunden, wobei das bogenförmige Langloch etwa rechtwinklig zu den Langlöchern ansetzend ausgebildet ist. Weiter ist die Kulissenführung in den Langlöchern vorgesehen, die mehrteilig und, über einen Bolzen in Langlöchern führbar ausgebildet ist. Durch diese Kulissenführung wird eine einfache Form der Führung vorgegeben, die einfach zu handhaben und die bei Verschleiss leicht austauschbar ist. Die Mehrteiligkeit erlaubt eine individuelle Anpassung der Kulissenführung in den Langlöchern der Rahmenplatten des Pflugrahmens und des Mittelstücks.

Gemäß einer Weiterbildung bildet das Langloch einen bogenförmigen Schlitz, dessen Kreisbogen einen im Zugpunkt bzw. im Bolzen liegenden Mittelpunkt aufweist. Damit ist eine gleichförmige Bewegung gesichert.

Um den Zugpunkt entsprechend seitlich einstellen oder verstellen zu können, ist vorgesehen, dass der Bolzen, der in den Langlöchern in den Rahmenplatten gerührt ist, mit einer sich am Mittelstück oder am Verbindungsteil der Pflugkoppel/Pflugturm abstützenden Stellspindel verbunden ist. Weiter vorn ist bereits darauf hingewiesen worden, dass diese so ausgebildete Stelleinrichtung sich besonders gut und sicher bedienen lässt, wobei durch geeignete Mittel wie Stellmotoren oder Hydraulikzylinder auch eine Fernbedienung vom Zugfahrzeug aus möglich ist. Über diese Stellspindel wird der Zugpunkt praktisch seitlich in Relation zum Pflugrahmen, Mittelstück und zum Pflugturm verschoben, was beispielsweise mit einem entsprechenden Schlüssel problemlos zu erreichen ist ohne dass diese beeinflusst werden.

Eine Anpassung der Breite der Vorderfurche und eine Einstellung bzw. Verstellung des Zugpunktes kann besonders gut mit dem geschilderten Einstellzentrum erreicht werden, wenn das Mittelstück mit einem Verbindungsteil der Pflugkoppel/Pflugturm quer verschieblich verbunden ist und mit den Langlöchern korrespondierend ausgebildete Langlöcher und darüber hinaus den im bogenförmigen Langloch geführten Bolzen der Fixiereinrichtung aufweist. Wird das Mittelstück relativ zum Verbindungsteil verschoben, so ändert sich damit die Breite der Vorderfurche. Wird der Zugpunkt durch die Stelleinrichtung beeinflusst und in den Langlöchern relativ zum Mittelstück und zum Pflugrahmen verschoben, so bleibt die Breite der Vorderfurche erhalten, wobei ein Bolzen als Fixiereinrichtung dafür sorgt, dass der Pflugrahmen bzw. der Pflugturm seine Lage nicht ändert; es wird nur der Zugpunkt verschoben.

Weiter ist vorgesehen, dass das Verbindungsteil eine Drehachse aufweist und über Längskanten mit den Führungsnuten des Mittelstücks querverschiebbar, kulissenartig verbunden ist.

Die Erfindung zeichnet sich insbesondere dadurch aus, dass ein Anbaupflug mit einem Einstellzentrum geschaffen ist, das leicht einzustellen ist, wobei der Zugpunkt unabhängig von der Breite der Vorderfurche eingestellt werden kann und das vor allem problemlos bei Traktoren mit Breitreifen eingesetzt werden kann bzw. mit Traktoren mit sehr geringem Abstand zwischen den Hinterrädern. Der gesamte Pflugrahmen wird beim Einstellen der Vorderfurchenbreite über die entsprechende Stelleinrichtung verschoben, der Pflugturm bzw. das Dreipunktgestänge muss aber dazu nicht verlagert werden.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Draufsicht auf einen Anbaupflug mit Einstellzentrum,
- Fig. 2: die gleiche Ansicht wie in Fig. 1, nur hier mit einem Hydraulikzylinder für die Einschwenkung des Pflugrahmens,
- Fig. 3: eine erklärende Explosionszeichnung mit Einzelteilen des Einstellzentrums und
- Fig. 4: eine perspektivische Detailansicht des Einstellzentrums.

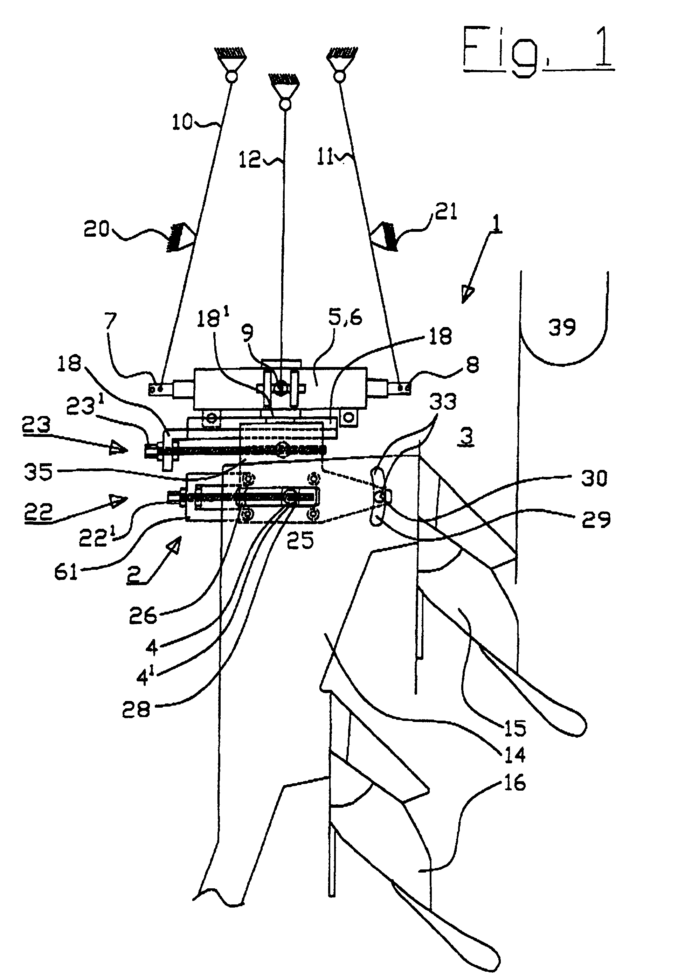

Fig. 1 zeigt einen Anbaupflug 1 als Anbaudrehpflug mit einem Einstellzentrum 2 in Arbeitsstellung.

Der Anbaupflug 1 ist über die Anschlagpunkte 7, 8, 9 mit dem Dreipunktgestänge 10, 11, 12 verbunden. Die Unterlenker 10, 11 sind über die Anschläge 20, 21 gesperrt. Die Befestigungspunkte bzw. die Anschlagpunkte 7, 8, 9 sind an der Pflugkoppel 5 bzw. am Pflugturm 6 vorgesehen. Der Pflugturm 6 nimmt die Drehachse 18' auf, die Bestandteil des Verbindungsteils 18 ist. Das Verbindungsteil 18 ist quer verschiebbar mit dem Mittelstück 35 verbunden.

Über die Stelleinrichtung 23 mit der Spindel 23' wird die seitliche Lage des Mittelstücks 35 in Relation zum Verbindungsteil 18 und damit zum Pflugturm 6 eingestellt. Diese Einstellung ermöglicht eine Veränderung der Vorderfurchenbreite 3, was nachfolgend noch näher beschrieben wird.

Das Mittelstück 35 trägt den Pflugrahmen 14 über die Rahmenplatten 25 und zwar über die Bolzen 4' und 30. Dabei ist der Pflugrahmen 14 um den Bolzen 4' begrenzt verschwenkbar gelagert. Über den Bolzen 30, der im kreisbogenförmigen Langloch 29 geführt ist, wird sowohl die begrenzte Verschwenkbarkeit des Pflugrahmens 14 vorgegeben, wie auch der Pflugrahmen 14 seitlich zum Mittelstück 35 fixiert wird. Der Bolzen 30 und das bogenförmige Langloch 29 bilden die Fixiereinrichtung 33. Eine seitliche Verlagerung des Pflugrahmens 14 und auch der Rahmenplatten 25 in Relation zum Mittelstück 35 wird dadurch ausgeschlossen.

In Richtung auf den Pflugrahmen 14 hin ist hinter der Stelleinrichtung 23 die Stelleinrichtung 22 angeordnet, über die der Zugpunkt 4 eingestellt werden kann. Der Bolzen 4' ist in einer Kulissenführung 28 gelagert, wobei die Kulissenführung 28 mit dem Bolzen 4' über die Stelleinrichtung 23 mit der Stellspindel 23' seitlich verschoben werden kann. Der Bolzen 4' bildet den Zugpunkt 4.

Bei Verstellung der Stelleinrichtung 22 mit der Stellspindel 22' wird der Zugpunkt 4 bzw. der Bolzen 4' relativ zur Fixiereinrichtung 33, zum Pflugturm 6, zur Pflugkoppel 5 aber auch zum Pflugrahmen 14 verschoben, ohne dass sich die Lage des Pflugrahmens 14 zur Pflugkoppel 5 bzw. zum Pflugturm 6 verändert. Dies wird durch die schon erwähnte Fixiereinrichtung 33 erreicht. Die Fixiereinrichtung 33 fixiert Pflugrahmen 14 und Pflugkoppel/Pflugturm 5, 6 seitlich zueinander, so dass dann die Lage des Pflugrahmens 14 zur Pflugkoppel 5 unverändert bleibt. Es ändert sich nur die Position der Kulissenführung 28, des Bolzens 4' und damit des Zugpunktes 4. Für eine ausreichende Anpassung des Anbaupfluges 1 zum hier nicht dargestellten Traktor bzw. Zugfahrzeug hinsichtlich Richtungsänderungen auf dem Acker ist vorgesehen, dass die Fixiereinrichtung 33 eine beschränkte Verschwenkbarkeit zwischen Pflugrahmen 14 und Pflugkoppel/Pflugturm 5, 6 um den Zugpunkt 4 bzw. den Bolzen 4' zulässt. Während des Drehvorganges wird dadurch auch sichergestellt, dass der Pflugrahmen 14 nicht nach unten durchschwenken kann. Der Pflugrahmen 14 ist mit Pflugkörpern 15, 16 bestückt.

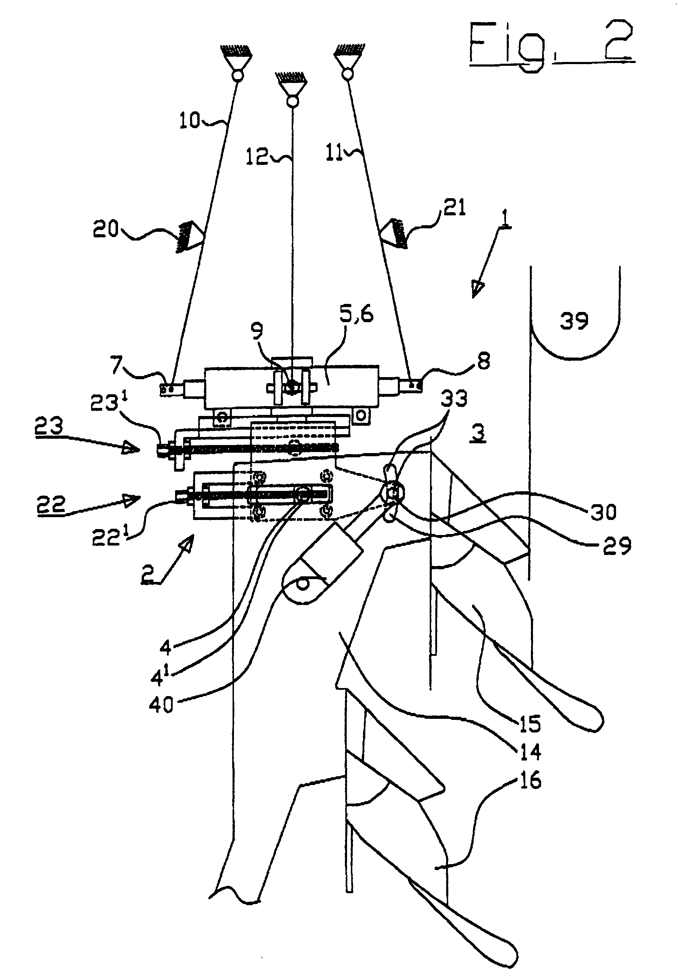

Die Ausbildung der Fixiereinrichtung 33 ist so, dass ein Bolzen 30 in einem bogenförmigen Langloch 29 eine gewisse Verschwenkung des Pflugrahmens zulässt, die durch die Form und die Länge des bogenförmigen Langlochs 29 vorgegeben ist. Gemäß Fig. 2 ist ein Hydraulikzylinder 40 mit dem Bolzen 30 verbunden, der die Verschwenkbarkeit des Pflugrahmens 14 relativ zur Pflugkoppel/Pflugturm 5, 6 um den Zugpunkt 4 bzw. den Bolzen 4' während der Pflugarbeit zulässt, jedoch während des Drehvorganges den Pflugrahmen 14 einschwenkt, um so mehr Bodenfreiheit zwischen Pflugrahmen 14 und Boden zu erzielen. Der Hydraulikzylinder 40 ist dabei so hydraulisch angeschlossen, dass er während des Drehvorganges mit Druck beaufschlagt wird, jedoch während der Arbeit auf Freilauf geschaltet ist. Der Hydraulikzylinder 40 ist mit seinem anderen Ende um eine in Arbeitsstellung senkrechte Achse 41 mit dem Pflugrahmen 14 im Abstand zum Bolzen 4' verbunden.

Die Fig. 1 und 2 zeigen, dass der Pflugrahmen 14 mit Rahmenplatte 25 versehen ist, die die Verbindung mit dem Mittelstück 35 bzw. mittelbar mit dem Pflugturm 6 ermöglicht.

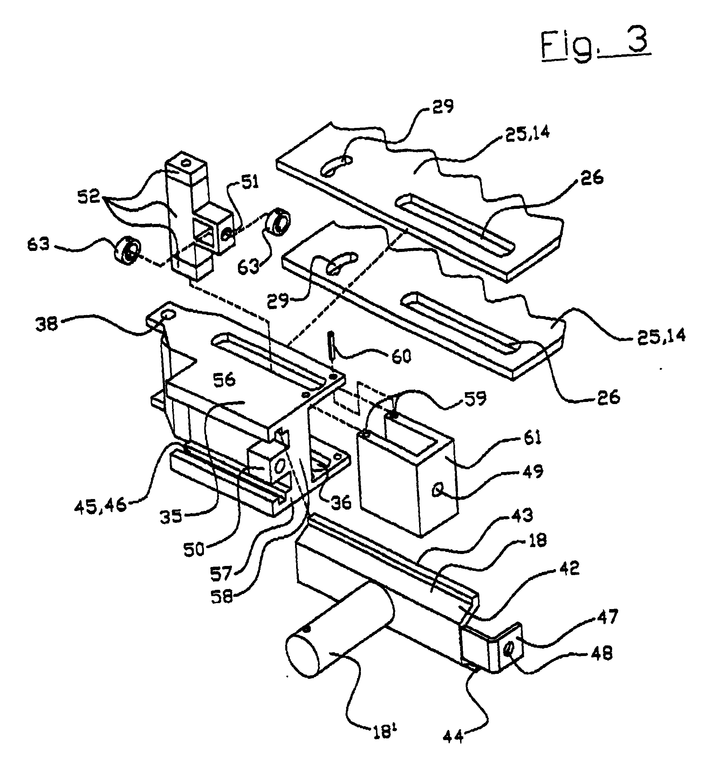

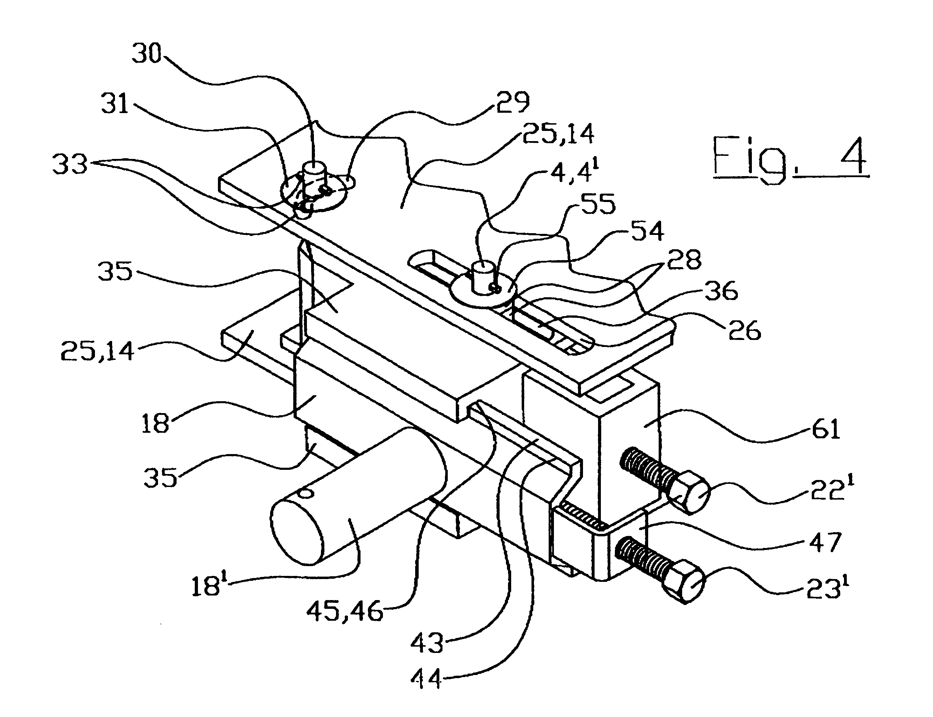

Diese Rahmenplatten 25 sind auch in Fig. 3 und Fig. 4 wiedergegeben. Gemäß Fig. 1 und Fig. 2 sind diese Rahmenplatten 25, 25' seitlich mit dem Pflugrahmen 14 verbunden.

Zur Führung der Kulissenführung 28 und des Bolzens 4' und damit des Zugpunktes 4 weisen die Rahmenplatten 25 querliegende Langlöcher 26 auf, in denen die mehrteilige Kulissenführung 28 mit Bolzen 4' geführt ist.

Auch das Mittelstück 35 ist mit querliegenden Langlöchern 36 ausgerüstet, in denen die Kulissenführung 28 mit Bolzen 4' geführt ist. Damit die zuvor beschriebene begrenzte Verschwenkbarkeit des Pflugrahmens 14 mit den Rahmenplatten 25 in Relation zum Mittelstück 35 problemlos möglich ist, ist die Kulissenführung 28 mehrteilig ausgebildet und mit Trennstellen im Bereich der Trennebenen der Rahmenplatten 25 zum Mittelstück 35 versehen. Durch die Bolzen 4' wird die Kulissenführung 28 zentriert und in sich geführt.

Die Kulissenführung 28 weist in der Mitte eine Aufnahme 56 für den Anschluss der Stellspindel 22' auf.

Fig. 3 verdeutlicht den Aufbau des Einstellzentrums 2 und zeigt auch die Ausführung des Mittelstücks 35, das einem Doppel-T-Träger ähnelt.

Die obere und die untere Platte 56, 57 sind über einen Steg 58 miteinander verbunden und weisen weisen Langlöcher 36 und außerdem Bohrungen 38 auf, in die der Bolzen 30 mit Stützringen 31 eingeführt werden kann. Dieser Bolzen 30 sorgt zusammen mit dem bogenförmigen Langloch 29 für eine seitliche Fixierung und stellt die Fixiereinrichtung 33 dar.

Das Mittelstück 35 weist auch Führungsnuten 45, 46 auf, die ein Verschieben des gesamten Mittelstückes 35 am Querbalken 42 des Verbindungsteils 18 ermöglichen. Der Querbalken 42 verfügt hierzu über entsprechend geformte Längskanten 43, 44, die mit den Führungsnuten 45, 46 korrespondierend ausgebildet sind.

Der Querbalken 42 verfügt über einen Querriegel 47, der mit einer Gewindebohrung 48 bestückt ist. In diesen Gewindebohrung 48 lässt sich die Stelleinrichtung 23 mit Spindel 23' unterbringen bzw. so verdrehen, dass damit auch gleichzeitig die Verschiebung des Mittelstücks 35 zum Verbindungsteil 18 möglich ist, was insgesamt einer Veränderung der Breite der Vorderfläche 3 entspricht.

Die Spindel 23' ist über die Aufnahme 50 und nicht dargestellten Stellringen 63 mit dem Mittelstück 35 verbunden. Die Stelleinrichtung 22 bzw. die Spindel 22' wird durch die Gewindebohrung 49 hindurchgeführt und dann mit der Aufnahme 56 an der Kulissenführung 28 festgelegt. Hier ist eine Bohrung 51 mit Stellringen 63 vorgesehen, die eine Fixierung der Stellspindel 23' ermöglicht. Die Gewindebohrung 49 befindet sich in einer Konsole 61, die über Sacklöcher 59 und Stiften 60 mit dem Mittelstück 35 verbunden ist, was insbesondere der Fig. 3 entnommen werden kann.

Die Kulissenführung 28 bzw. der Bolzen 4' ist in den Langlöchern 36 bzw. den Langlöchern 26 verschiebbar angeordnet, wozu er aus Führungsteilen 52 und einer Aufnahme 56 besteht. An der Aufnahme kann die Stellspindel 22' wie zuvor erwähnt festgelegt werden. Einzelheiten hierzu sind der Fig. 3 zu entnehmen. Ein Herausrutschen der Kulissenführung 28 wird aber durch die Führungsplatten 54 mit dem Haltestift 55 verhindert, sodass immer eine sichere Führung der Kulissenführung 28, des Bolzens 4' und damit des Zugpunktes 4 gewährleistet ist.

In den gezeigten Ausführungen kann somit die Breite der Vorderfurche 3 mit der Spindel 23' eingestellt werden, mit gleichzeitiger Verlagerung des Zugpunktes 4 in Relation zur Pflugkoppel 5. Mit der Spindel 22' wird der Zugpunkt 4 eingestellt, ohne dass sich die Breite der Vorderfurche 3 ändert und ohne seitliche Verlagerung des Pflugturmes 6 und des Pflugrahmens 14.

Wenn auf die Konsole 61 verzichtet wird und die Stellspindel 22' ebenfalls mit dem Querriegel 47 des Verbindungsteils 18 verbunden wird, verändert sich die Lage des Zugpunktes 4 nicht, wenn mit der Spindel 23' die Breite der Vorderfurche 3 verändert wird. Der Zugpunkt 4 verbleibt dann in der Lage in Relation zur Pflugkoppel 4 und damit zum Zugfahrzeug.

## Patentansprüche

1. Anbaupflug mit einem mindestens zwei Pflugkörper (15,16) aufweisenden Pflugrahmen (14) und mit einem zwischen Pflugkoppel (5) bzw. einem Pflugturm (6) und dem Pflugrahmen (14) angeordneten Einstellzentrum (2) mit Stelleinrichtung (23) für die Einstellung der Breite der Vorderfurche (3) und des Zugpunktes (4), wobei die Pflugkoppel (5) Anschlagpunkte (7,8,9) für ein Dreipunktgestänge (10,11,12) bzw. die Unterlenker (10,11) eines Zugfahrzeuges, die über Anschläge (20,21) seitlich gesperrt sind, aufweist, wobei der Zugpunkt (4) relativ zum Pflugrahmen (14) und zur Pflugkoppel (5) bzw. zum Pflugturm (6) seitlich verschiebbar ausgebildet ist, wobei Pflugkoppel/Pflugturm (5,6) und Pflugrahmen (14) mittelbar oder unmittelbar ein unbeabsichtigtes seitliches Verschieben zueinander verhindernd miteinander verbunden sind, **dadurch gekennzeichnet, dass** das Einstellzentrum (2) eine Stelleinrichtung (22) für den Zugpunkt (4) und eine Pflugrahmen (14) und Pflugkoppel/Pflugturm (5, 6) seitlich zueinander fixierende Fixiereinrichtung (33) aufweist, die eine beschränkte Verschwenkung zwischen Pflugrahmen (14) und Pflugkoppel/Pflugturm (5,6) um den Zugpunkt (4) zulassend ausgebildet ist.

2. Anbaupflug nach Anspruch 1,
**dadurch gekennzeichnet,**
**dass** die Fixiereinrichtung (33) den Pflugrahmen (14) über einen Hydraulikzylinder (40) um den Zugpunkt (4) bzw. einen Bolzen (4') verschwenkend ausgebildet ist.

3. Anbaupflug nach Anspruch 2,
**dadurch gekennzeichnet,**
**dass** der Hydraulikzylinder (40) einen nur in Arbeitsstellung wirksamen Freilauf aufweisend ausgebildet ist.

4. Anbaupflug nach einem der vorhergehenden Ansprüche,
**dadurch gekennzeichnet,**
**dass** das Einstellzentrums (2) mit der Stelleinrichtung (22, 23) dem Pflugrahmen (14) zugeordnete Rahmenplatten (25) aufweist, die mit quer verlaufenden Langlöchern (26, 36) versehen sind, die zur Führung des Zugpunktes (4) dienen, dem eine mehrteilige und über einen Bolzen (4'), der den Zugpunkt (4) bildet, fixierbare Kulissenführung (28) zugeordnet ist.

5. Anbaupflug nach einem der vorhergehenden Ansprüche,
**dadurch gekennzeichnet,**
**dass** die Fixiereinrichtung (33) von einem den Rahmenplatten (25) zusätzlich zugeordneten bogenförmigen Langloch (29) gebildet ist, das einen dem Einstellzentrum (2) zugeordneten Bolzen (30) aufnehmend ausgeführt sind.

6. Anbaupflug nach Anspruch 5,
**dadurch gekennzeichnet,**
**dass** das Langloch (29) einen bogenförmigen Schlitz ergebend ausgebildet ist, dessen Kreisbogen einen im Zugpunkt (4) bzw. im Bolzen (4') liegenden Mittelpunkt aufweist.

7. Anbaupflug nach Anspruch 6,
**dadurch gekennzeichnet,**
**dass** der Bolzen (4'), der in den Langlöchern (26, 36) in den Rahmenplatten (25) geführt ist, mit einer sich am Mittelstück (35) der Pflugkoppel/Pflugturm (5,6) abstützenden Stellspindel (22') verbunden ist.

8. Anbaupflug nach Anspruch 7,
**dadurch gekennzeichnet,**
**dass** das Mittelstück (35) mit einem Verbindungsteil (18) der Pflugkoppel/Pflugturm (5,6) quer verschiebbar verbunden ist und mit den Langlöchern (26) korrespondierend ausgebildete Langlöcher (36) und darüber hinaus den im bogenförmigen Langloch (29) geführten Bolzen (30) der Fixiereinrichtung (33) aufweist.

9. Anbaupflug nach Anspruch 8,
**dadurch gekennzeichnet,**
**dass** das Verbindungsteil (18) eine Drehachse (18') aufweist und über Längskanten (43,44) mit den Führungsnuten (45,46) des Mittelstücks (35) quer verschiebbar, kulissenartig verbunden ist.

## Claims

1. A hitched plough with a plough frame (14) having at least two plough bottoms (15,16) and an adjustable centre (2) arranged between a plough coupler (5) or plough tower (6) and plough frame (14), having an adjusting device (23) for adjusting the width of the front furrow (3) and of the traction point (4), where the plough coupler (5) has stop points (7,8,9) for a three-point rod assembly (10,11,12) or the sub-rods of a traction vehicle, which are locked laterally via stops (20,21) where traction point (4) is constructed laterally displaceable relative to plough frame (4) and to plough coupler (5) or to plough tower (6), where plough coupler/plough tower (5,6) and plough frame (14) are directly or indirectly connected with each other preventing an unintended lateral displacement to one another, **characterised in that** adjustable centre (2) has an adjusting device (22) for the traction point (4) and a securing device (33) for laterally securing a plough frame (14) and a plough coupler/plough tower (5,6) to one another, which is constructed allowing a limited horizontal swing between plough frame (14) and plough coupler/plough tower (5,6)

2. A hitched plough as according to claim 1, **characterised in that** securing device (33) is constructed horizontally swinging the plough frame (14) about traction point (4) or a bolt (4') via a hydraulic cylinder (40).

3. A hitched plough according to claim 2, **characterised in that** the hydraulic cylinder is constructed having a free-wheel only active in the working position.

4. A hitched plough according to any of above claims, **characterised in that** the adjustable centre (2) with adjusting device (22,23) has frame plates (25) associated with plough frame (4), which are provided with transverse extending longitudinal holes (26,36) which serve to guide traction point (4), with which a multiple-part coulisse guide (28) is associated, securable via a bolt (4') which forms the traction point (4).

5. A hitched plough according to any of above claims, **characterised in that** securing device (33) is formed from an arc-shaped longitudinal hole (29) additionally associated with frame plates (25), which is executed for receiving a bolt (30) associated with adjustable centre (2).

6. A hitched plough according to claim 5, **characterised in that** longitudinal hole (29) is constructed resulting in an arc-shaped slot, whose circular arc has a central point located in the traction point (4) or in bolt (4').

7. A hitched plough according to claim 6, **characterised in that** bolt (4'), which is directed into longitudinal holes (26,36) in frame plate (25), is connected with an adjusting spindle (22') supporting itself on the central part (35) of plough coupler/plough tower (5,6).

8. A hitched plough according to claim 7, **characterised in that** central part (35) is connected transversely displaceable with a connecting part (18) of plough coupler/plough tower (5,6) and with longitudinal holes (36) constructed corresponding to longitudinal holes (26), and in addition has the bolt (30) of securing device (33) directed into an arc-shaped longitudinal hole (29).

9. A hitched plough according to claim 8, **characterised in that** connecting part (18) has a rotational axis (18'), and is connected coulisse-like, transversely displaceable via longitudinal edges (43,44), with the guide groove (45,46) of central part (35).

## Revendications

1. Charrue portée, comportant un cadre de charrue (14) présentant au moins deux corps de charrue (15, 16) et avec un centre de réglage (2), disposé entre l'attelage de charrue (5), respectivement une tourelle à charrue (6), et le cadre de charrue (14), avec un dispositif de réglage (23) pour régler la largeur du sillon avant (3) et du point de traction (4), l'attelage de charrue (5) présentant des points de butée (7,8,9) pour un attelage à trois points (10,11,12), respectivement pour les bras articulés inférieurs (10,11) d'un véhicule tracteur, qui sont bloqués latéralement par des butées (20,21), le point de traction (4) étant déplaçable latéralement par rapport au cadre de charrue (14) et au couplage de charrue (5), respectivement à la tourelle de charrue (6), le couplage de charrue/tourelle de charrue (5,6) et le cadre de charrue (14) étant reliés ensemble indirectement ou directement avec empêchement de déplacement latéral intempestif mutuel, **caractérisée en ce que** le centre de réglage (2) présente un dispositif de réglage (22) pour le point de traction (4), et un dispositif de fixation (33), fixant latéralement les uns par rapport aux autres le cadre de charrue (14) et le couplage de charrue/tourelle de charrue (5,6), le dispositif de fixation (33) étant réalisé en admettant un pivotement limité entre le cadre de charrue (14) et le couplage de charrue/tourelle de charrue (5,6) autour du point de traction (4).

2. Charrue portée selon la revendication 1, **caractérisée en ce que** le dispositif de fixation (33) est réalisé en produisant un pivotement du cadre de charrue (14) par l'intermédiaire d'un vérin hydraulique (40), autour du centre de traction (4), respectivement d'un boulon (4').

3. Charrue portée selon la revendication 2, **caractérisée en ce que** le vérin hydraulique (40) est réalisé de façon à présenter un mouvement libre, n'agissant qu'en position de travail.

4. Charrue portée selon l'une des revendications précédentes, **caractérisée en ce que** le centre de réglage (2), muni du dispositif de réglage (22,23), présente des plaques de cadre (25) associées au cadre de charrue (14), plaques de cadre munies de trous oblongs (26,36) s'étendant transversalement, servant au guidage du point de traction (4), auquel est associé un guidage à coulisse (28), réalisé en plusieurs parties et susceptible d'être bloqué par l'intermédiaire d'un boulon (4') qui forme le point de traction (4).

5. Charrue portée selon l'une des revendications précédentes, **caractérisée en ce que** le dispositif de fixation (33) est formé par un trou oblong (29) à forme arquée, associé, à titre supplémentaire, aux plaques de cadre (25), le trou oblong étant réalisé de façon à recevoir un boulon (30) associé au centre de réglage (2).

6. Charrue portée selon la revendication 5, **caractérisée en ce que** le trou oblong (29) est réalisé en produisant une fente arquée, dont l'arc de cercle présente un centre situé au point de traction (4) ou dans le boulon (4').

7. Charrue portée selon la revendication 6, **caractérisée en ce que** le boulon (4'), guidé dans les trous oblongs (26,36) ménagés dans les plaques de cadre (25), est relié à une broche de réglage (22') prenant appui sur la pièce centrale (35) du couplage de charrue/tourelle de charrue (5,6).

8. Charrue portée selon la revendication 7, **caractérisée en ce que** la pièce centrale (35) est reliée, de façon déplaçable transversalement, à une partie de liaison (18) du couplage de charrue/tourelle de charrue (5,6) et présente des trous oblongs (36), réalisés de façon à correspondre aux trous oblongs (26) et, de plus, présente le boulon (30), guidé dans le trou oblong (29) à forme arquée, du dispositif de fixation (33).

9. Charrue portée selon la revendication 8, **caractérisée en ce que** la partie de liaison (18) présente un axe de rotation (18') et est reliée, à la façon d'une coulisse, de façon à permettre un déplacement transversal, aux rainures de guidage (45,46) de la pièce centrale (35), par l'intermédiaire d'arêtes longitudinales (43,44).
